# EUROPÄISCHE PATENTSCHRIFT

(11) **EP 3 797 059 B1**
(45) Veröffentlichungstag und Bekanntmachung des Hinweises auf die Patenterteilung: **30.08.2023**
(21) Anmeldenummer: 19725356.0
(22) Anmeldetag: 20.05.2019
(51) Int. Cl.: B62D 5/00, B62D 5/04

(54) **VERFAHREN ZUR STEUERUNG EINES STEER-BY-WIRE-LENKSYSTEMS MIT EINEM NOTLENKBETRIEB**
METHOD FOR CONTROLLING A STEER-BY-WIRE STEERING SYSTEM
PROCÉDÉ DE COMMANDE D'UN SYSTÈME DE DIRECTION À COMMANDE ÉLECTRIQUE À MODE DE FONCTIONNEMENT DE SECOURS

(30) Priorität: 23.05.2018 DE 102018112352
(43) Veröffentlichungstag der Anmeldung: 31.03.2021
(73) Patentinhaber: thyssenkrupp Presta AG, 9492 Eschen (LI); thyssenkrupp AG, 45143 Essen (DE)
(72) Erfinder: HORVATH, Gergely, 6085 Fülöpszállás (HU); REPAY, Adam, 1188 Budapest (HU)
(74) Vertreter: thyssenkrupp Intellectual Property GmbH
(86) Internationale Anmeldenummer: PCT/EP2019/062984
(87) Internationale Veröffentlichungsnummer: WO 2019/224156

(56) Entgegenhaltungen:
- EP-A2- 1 437 287
- WO-A1-2017/115411
- WO-A1-2017/182351

## Beschreibung

Die vorliegende Erfindung betrifft ein Verfahren zur Steuerung eines Steer-by-Wire Lenksystems mit den Merkmalen des Oberbegriffs des Anspruchs 1 und ein Steer-by-Wire-Lenksystem, das dazu ausgebildet ist, dieses Verfahren auszuführen.

Bei Steer-by-Wire-Lenksystemen ist die Stellung der gelenkten Räder nicht direkt mit dem Lenkrad gekoppelt. Es besteht eine Verbindung zwischen dem Lenkrad und den gelenkten Rädern über elektrische Signale. Der Fahrerlenkwunsch wird von einem Lenkwinkelsensor abgegriffen und in Abhängigkeit des Fahrerlenkwunsches wird über einen Lenksteller die Stellung der gelenkten Räder geregelt. Eine mechanische Verbindung zu den Rädern ist nicht vorgesehen, sodass nach Betätigung des Lenkrads eine Kraft-Rückmeldung fehlt, z. B. eine entsprechende Rückmeldung beim Einparken, wo aus Komfortgründen ein geringer Kraftaufwand gewünscht ist, oder bei einer üblichen Geradeausfahrt, bei der ein der Fahrzeugreaktion entsprechendes höheres Lenkmoment gewünscht ist. Um bei Steer-by-Wire-Lenkungen die Rückmeldungen der Straße auf das Lenkrad zu simulieren, ist es notwendig am Lenkrad bzw. der Lenksäule einen Feedback-Aktuator (FBA) vorzusehen, welcher in Abhängigkeit von den Rückwirkungen der Lenkhandhabe ein Lenkgefühl aufprägt. Das Lenkgefühl ist mittels Übertragungsfunktionen realisierbar, die von Betriebsparametern des Fahrzeuges bzw. des Lenksystems abhängen. Beispielsweise kann eine Lenkübersetzung als Funktion der Fahrzeuggeschwindigkeit und/oder des Lenkwinkels ausgebildet sein. Das bedeutet, dass beispielsweise bei kleineren Fahrzeuggeschwindigkeiten eine andere Lenkübersetzung vorliegt als bei höheren Geschwindigkeiten. Ebenso kann bei einem kleineren Lenkwinkel eine andere Lenkübersetzung vorliegen als bei größeren Lenkwinkeln.

Im Normalbetrieb betreibt die Steuerung das Steer-by-Wire-Lenksystem und überprüft permanent die ordnungsgemäße Funktion der Systembestandteile des Lenksystems. Kommt es zu einem Fehler wird die Funktion des Steer-by-Wire-Lenksystem abgeschaltet. Es kann eine mechanische Rückfallebene vorgesehen sein, die einen Notlenkbetrieb ermöglicht. Solche mechanischen Rückfallebenen sind jedoch kostenintensiv und daher unerwünscht.

Aus WO 2017/115411 A1 ist ein Steer-by-Wire Lenksystem bekannt, dass ohne eine Rückfallkupplung Sicherheit gewährleistet. Dazu ist der Lenkstellmotor als ein Doppelwicklungsmotor mit zwei dreiphasigen Wicklungssätzen und einem Doppelinverter zur individuellen Ansteuerung der Wicklungssätze ausgebildet. Der Lenkstellmotor ist dadurch dazu ausgebildet, zu verhindern, vollkommen funktionslos zu werden, selbst wenn ein Fehler auftritt.

EP 1 437 287 A2 beschreibt ein Servolenksystem mit einem Elektromotor, der zwei erregte Windungssysteme enthält, die in einem Normalbetrieb zusammenwirken, um den Rotor zu drehen. Bei einem anomalen Zustand in einem der beiden Systeme können die erregten Windungen des anderen Systems den Motor weiter drehen, so dass das Servolenksystem einen fehlersicheren Betrieb auch im Falle eines anomalen Zustands eines der Windungssysteme gewährleistet.

Es ist Aufgabe der vorliegenden Erfindung, ein Verfahren zur Steuerung eines Steer-by-Wire-Lenksystems für Kraftfahrzeuge anzugeben, das ohne mechanische Rückfallebene, einen Notlenkbetrieb ermöglicht.

Diese Aufgabe wird von einem Verfahren zur Steuerung eines Steer-by-Wire-Lenksystems mit den Merkmalen des Anspruchs 1 und einem Steer-by-Wire-Lenksystem, das dazu ausgelegt ist, ein solches Verfahren auszuführen, gelöst. Weitere vorteilhafte Ausbildungen der Erfindung sind den Unteransprüchen zu entnehmen.

Demnach ist ein Verfahren zur Steuerung eines Steer-by-Wire-Lenksystems für Kraftfahrzeuge vorgesehen, wobei das Steer-by-Wire-Lenksystem einen auf die gelenkten Räder wirkenden, in Abhängigkeit von einem Fahrerlenkwunsch elektronisch geregelten Lenksteller, einen Feedback-Aktuator, der Rückwirkungen der Straße auf ein Lenkrad überträgt, und eine Steuereinheit umfassend eine Software, die den elektronisch geregelten Lenksteller ansteuert, aufweist. Das Verfahren weist folgende Verfahrensschritte auf:
- Überwachen der Funktion der Software in einem Normalbetrieb des Steer-by-Wire-Lenksystem;
- Feststellen einer fehlerhaften Funktion der Software und/oder einer Steuerungshardware des Steer-by-Wire-Lenksystems und Betreiben des Steer-by-Wire-Lenksystems in einem Notlenkbetrieb, wobei der Lenksteller derart angesteuert wird, dass das Drehmoment des Lenkstellers in dem Notlenkbetrieb gegenüber dem Normalbetrieb reduziert ist.

Der erfindungsgemäße Notlenkbetrieb erlaubt ein Lenken des Lenksystems beim Vorliegen von Softwarefehlern auf einfache Art und Weise, ohne mechanische Rückfallebene.

Unter dem Begriff der Steuerungshardware des Steer-by-Wire-Lenksystems ist die elektronische Hardware zu verstehen, die zum Ablauf der Software und zur Leistungsansteuerung des Elektromotors erforderlich sind, beispielsweise ein Inverter oder eine elektronische Steuerschaltung.

Vorzugsweise wird der Lenksteller in dem Notlenkbetrieb derart angesteuert, dass das Drehmoment des Lenkstellers in dem Notlenkbetrieb gegenüber dem Normalbetrieb um einen Faktor reduziert ist. Es kann auch vorgesehen sein, dass der Lenksteller in dem Notlenkbetrieb derart angesteuert wird, dass das Drehmoment des Lenkstellers in dem Notlenkbetrieb einen Maximalwert aufweist, der gegenüber einem Maximalwert des Normalbetriebs reduziert ist. Vorzugsweise weist der Lenksteller in dem Notlenkbetrieb eine gegenüber dem Normalbetrieb reduzierte Drehgeschwindigkeit auf. Es kann vorgesehen sein, dass der Lenksteller in dem Notlenkbetrieb derart angesteuert wird, dass die Drehgeschwindigkeit des Lenkstellers in dem Notlenkbetrieb gegenüber dem Normalbetrieb um einen Faktor reduziert ist. Vorzugsweise wird der Lenksteller in dem Notlenkbetrieb derart angesteuert, dass die Drehgeschwindigkeit des Lenkstellers in dem Notlenkbetrieb einen Maximalwert aufweist, der gegenüber einem Maximalwert des Normalbetriebs reduziert ist. Der Lenksteller weist somit in dem Notlenkbetrieb eine gegenüber dem Normalbetrieb eingeschränkte Performance auf.

Es ist weiterhin vorteilhaft, wenn im Notlenkbetrieb eine maximal zulässige Fahrzeuggeschwindigkeit vorgesehen ist, die insbesondere nicht überschritten werden kann. Somit kann sichergestellt werden, dass das Fahrzeug trotz der eingeschränkten Lenkfähigkeiten sicher manövriert wird. Vorzugsweise ist die maximal zulässige Fahrzeuggeschwindigkeit 10 km/h.

Es ist vorteilhaft, wenn der Notlenkbetrieb dem Fahrer durch ein elektrisch oder elektronisch erzeugtes Signal angezeigt wird. Vorzugsweise muss der Notlenkbetrieb durch eine Eingabe des Fahrers bestätigt werden.

Es ist weiterhin ein Steer-by-Wire-Lenksystem eines Kraftfahrzeugs vorgesehen, das dazu ausgebildet ist, das zuvor beschriebene Verfahren auszuführen.

Eine bevorzugte Ausführungsform der Erfindung wird nachfolgend anhand der Zeichnung näher erläutert.

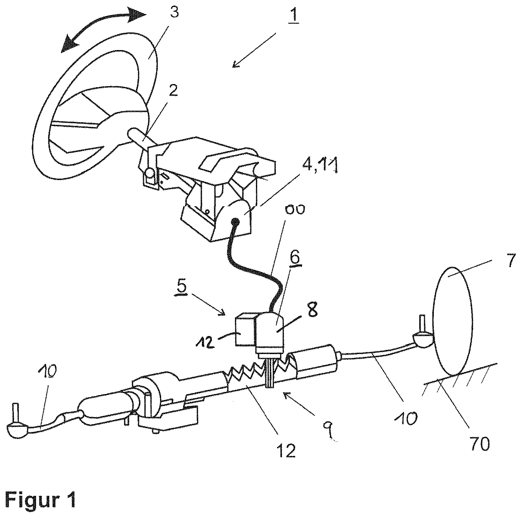

Die Figur 1 zeigt eine schematische Darstellung eines Steer-by-Wire-Lenksystems 1. An einer Lenkwelle 2 ist ein nicht dargestellter Drehwinkelund Drehmomentsensor angebracht, welcher das durch Drehen des Lenkrads 3 aufgebrachte Fahrerlenkmoment erfasst. Des Weiteren ist an der Lenkwelle 2 ein Feedback-Aktuator 4 angebracht, welcher dazu dient, die Rückwirkungen von der Fahrbahn 70 auf das Lenkrad 3 zu übertragen und somit dem Fahrer eine Rückmeldung über das Lenk- und Fahrverhalten des Fahrzeugs zu geben. Der Fahrerlenkwunsch wird über den vom Drehwinkelsensor gemessenen Drehwinkel der Lenkwelle 2 über Signalleitungen 60 an eine Steuereinheit 5 übertragen. Die Steuereinheit 5 steuert in Abhängigkeit von dem Signal des Drehwinkelsensors sowie von weiteren Eingangsgrößen, wie z. B. Fahrzeuggeschwindigkeit, Gierrate und dergleichen einen elektrischen Lenksteller 6 an, welcher die Stellung der gelenkten Räder 7 steuert. Der Lenksteller 6 weist einen Elektromotor 8 auf, der über ein Zahnstangen-Lenkgetriebe 9 sowie Spurstangen 10 und anderen Bauteilen mittelbar auf die gelenkten Räder 7 wirkt. Der Feedback-Aktuator 4 weist einen von der Steuereinheit 5 angesteuerten Elektromotor 11 auf. Die Steuereinheit 5 umfasst eine Software 12, die durch eine auf der Steuereinheit 5 befindlichen Prozessoreinheit ausgeführt wird.

Bei Feststellung einer fehlerhaften Funktion der Software wurde bisher, im Stand der Technik mindestens ein Teil der Software deaktiviert, was den Ausfall des Lenksystems zur Folge hatte. Erfindungsgemäß wird in einen Notlenkbetrieb gewechselt, der einen geringeren Funktionsumfang aufweist als der Normalbetrieb des Lenksystems.

Im Normalbetrieb betreibt die Steuerung das Steer-by-Wire-Lenksystem 1 und überprüft permanent die ordnungsgemäße Funktion der Systembestandteile. Im Normalbetrieb liegt kein Fehler bzw. kein kritischer Fehler in der Software und/oder der Hardware des Lenksystems vor, d. h. sie ist fehlerfrei. Dabei ist es denkbar und möglich, dass ein Fehler im Feedback-Aktuator 4, in der Steuereinheit 5 - und dort beispielsweise in einem Inverter der die Leistungsansteuerung für den Elektromotor 8 vornimmt, in der Verkabelung oder in Anschlussbuchsen auftritt. Auch derartige Fehler werden durch die erfindungsgemäße Lösung behandelt. Wird ein Softwarefehler in der Übersetzung und/oder Synchronisation zwischen Feedback-Aktuator 4 und Lenksteller 6 festgestellt, geht das Steer-by-Wire-Lenksystem 1 in einen Notlenkbetrieb über. Im Gegensatz zu Hardware-Fehlern erlauben Fehler in der Software 12 die Benutzung des Steer-by-Wire-Lenksystems mit eingeschränkter Performance. Da in diesem Fall die Übersetzung und/oder die Synchronisation zwischen Feedback-Aktuator 4 und Lenksteller 6 fehlerhaft sind, ist das Lenkgefühl für den Fahrer ungewohnt. Ein Normalbetrieb des Lenksystems ist daher aus Sicherheitsgründen nicht möglich. In dem Notlenkbetrieb kann der Fahrer das Kraftfahrzeug, beispielsweise aus einer Gefahrensituation herauslenken. Es ist denkbar, dass das Kraftfahrzeug auf der Autobahn liegen bleibt und ein Abschleppwagen benötigt wird. Das Kraftfahrzeug kann dann im Notlenkbetrieb von der Straße und auf den Abschleppwagen gefahren werden. In dem Notlenkbetrieb ist es vorgesehen, dass der Lenksteller 6 der Bewegung des Feedback-Aktuators 4 folgt, selbst wenn keine oder eine fehlerhafte Synchronisation vorliegt. Der Lenksteller 6 bewegt sich bevorzugt mit einem begrenzten und gegenüber dem Normalbetrieb reduzierten Drehmoment und/oder mit begrenzter und gegenüber dem Normalbetrieb reduzierter Geschwindigkeit. Für den Notlenkbetrieb ist eine maximal zulässige Kraftfahrzeuggeschwindigkeit vorgesehen, die bevorzugt 10 km/h ist.

In dem Notlenkbetrieb kann vorgesehen sein, dass der Fahrzeuglenker durch Eingabe bestätigen muss, dass sich das Kraftfahrzeug in dem Notlenkbetrieb befindet. Dies erfolgt bevorzugt in gleichmäßigen zeitlichen Abständen. Der erfindungsgemäße Notlenkbetrieb ermöglicht, das Kraftfahrzeug ohne mechanische Rückfallebene zu lenken. Selbst wenn das Kraftfahrzeug an sich, beispielsweise durch Motorschaden, fahrunfähig ist, ist ein Lenken des Kraftfahrzeuges möglich.

## Patentansprüche

1. Verfahren zur Steuerung eines Steer-by-Wire-Lenksystems für Kraftfahrzeuge, wobei das Steer-by-Wire-Lenksystem (1)
• einen auf die gelenkten Räder (7) wirkenden, in Abhängigkeit von einem Fahrerlenkwunsch elektronisch geregelten Lenksteller (6),
• einen Feedback-Aktuator (4), der Rückwirkungen der Straße auf ein Lenkrad (3) überträgt, und
• eine Steuereinheit (5) umfassend eine Software (12), die den elektronisch geregelten Lenksteller (6) ansteuert, aufweist, **dadurch gekennzeichnet, dass** folgende Verfahrensschritte vorgesehen sind:
- Überwachen der Funktion der Software (12) in einem Normalbetrieb des Steer-by-Wire-Lenksystem (1);
- Feststellen einer fehlerhaften Funktion der Software (12) und/oder einer Steuerungshardware des Steer-by-Wire-Lenksystems und Betreiben des Steer-by-Wire-Lenksystems (1) in einem Notlenkbetrieb, wobei der Lenksteller (6) derart angesteuert wird, dass das Drehmoment des Lenkstellers (6) in dem Notlenkbetrieb gegenüber dem Normalbetrieb reduziert ist.

2. Verfahren nach Anspruch 1, **dadurch gekennzeichnet, dass** der Lenksteller (6) in dem Notlenkbetrieb derart angesteuert wird, dass das Drehmoment des Lenkstellers (6) in dem Notlenkbetrieb gegenüber dem Normalbetrieb um einen Faktor reduziert ist.

3. Verfahren nach Anspruch 1 oder 2, **dadurch gekennzeichnet, dass** der Lenksteller (6) in dem Notlenkbetrieb derart angesteuert wird, dass das Drehmoment des Lenkstellers (6) in dem Notlenkbetrieb einen Maximalwert aufweist, der gegenüber einem Maximalwert des Normalbetriebs reduziert ist.

4. Verfahren nach einem der vorhergehenden Ansprüche, **dadurch gekennzeichnet, dass** der Lenksteller (6) in dem Notlenkbetrieb eine gegenüber dem Normalbetrieb reduzierte Drehgeschwindigkeit aufweist.

5. Verfahren nach Anspruch 4, **dadurch gekennzeichnet, dass** der Lenksteller (6) in dem Notlenkbetrieb derart angesteuert wird, dass die Drehgeschwindigkeit des Lenkstellers (6) in dem Notlenkbetrieb gegenüber dem Normalbetrieb um einen Faktor reduziert ist.

6. Verfahren nach Anspruch 4 oder 5, **dadurch gekennzeichnet, dass** der Lenksteller (6) in dem Notlenkbetrieb derart angesteuert wird, dass die Drehgeschwindigkeit des Lenkstellers (6) in dem Notlenkbetrieb einen Maximalwert aufweist, der gegenüber einem Maximalwert des Normalbetriebs reduziert ist.

7. Verfahren nach einem der vorhergehenden Ansprüche, **dadurch gekennzeichnet, dass** der Notlenkbetrieb eine maximal zulässige Fahrzeuggeschwindigkeit umfasst.

8. Verfahren nach Anspruch 7, **dadurch gekennzeichnet, dass** die maximal zulässige Fahrzeuggeschwindigkeit 10 km/h ist.

9. Verfahren nach einem der vorhergehenden Ansprüche, **dadurch gekennzeichnet, dass** der Notlenkbetrieb dem Fahrer durch ein elektrisch oder elektronisch erzeugtes Signal angezeigt wird.

10. Verfahren nach einem der vorhergehenden Ansprüche, **dadurch gekennzeichnet, dass** der Notlenkbetrieb durch eine Eingabe des Fahrers bestätigt werden muss.

11. Steer-by-Wire-Lenksystem (1) eines Kraftfahrzeugs, das dazu ausgebildet ist, ein Verfahren nach einem der Ansprüche 1 bis 10 auszuführen.

## Claims

1. Method for controlling a steer-by-wire steering system for motor vehicles, the steer-by-wire steering system (1) having
• a steering actuator (6) which acts on the steered wheels (7) and is electronically regulated in a manner which is dependent on a driver's steering request,
• a feedback actuator (4) which transmits feedback effects from the road to a steering wheel (3), and
• a control unit (5) comprising software (12) which actuates the electronically controlled steering actuator (6), **characterized in that** the following method steps are provided:
- monitoring of the function of the software (12) in a normal mode of the steer-by-wire steering system (1) ;
- determining of a faulty function of the software (12) and/or control hardware of the steer-by-wire steering system and operating of the steer-by-wire steering system (1) in an emergency steering mode, the steering actuator (6) being actuated in such a way that the torque of the steering actuator (6) in the emergency steering mode is reduced in comparison with the normal mode.

2. Method according to Claim 1, **characterized in that** the steering actuator (6) is actuated in the emergency steering mode in such a way that the torque of the steering actuator (6) in the emergency steering mode is reduced by a factor in comparison with the normal mode.

3. Method according to Claim 1 or 2, **characterized in that** the steering actuator (6) is actuated in the emergency steering mode in such a way that the torque of the steering actuator (6) in the emergency steering mode has a maximum value which is reduced in comparison with a maximum value of the normal mode.

4. Method according to one of the preceding claims, **characterized in that** the steering actuator (6) in the emergency steering mode has a rotary speed which is reduced in comparison with the normal mode.

5. Method according to Claim 4, **characterized in that** the steering actuator (6) is actuated in the emergency steering mode in such a way that the rotary speed of the steering actuator (6) in the emergency steering mode is reduced by a factor in comparison with the normal mode.

6. Method according to Claim 4 or 5, **characterized in that** the steering actuator (6) is actuated in the emergency steering mode in such a way that the rotary speed of the steering actuator (6) in the emergency steering mode has a maximum value which is reduced in comparison with a maximum value of the normal mode.

7. Method according to one of the preceding claims, **characterized in that** the emergency steering mode comprises a maximum permissible vehicle speed.

8. Method according to Claim 7, **characterized in that** the maximum permissible vehicle speed is 10 km/h.

9. Method according to one of the preceding claims, **characterized in that** the emergency steering mode is indicated to the driver by way of an electrically or electronically generated signal.

10. Method according to one of the preceding claims, **characterized in that** the emergency steering mode has to be confirmed by way of an input of the driver.

11. Steer-by-wire steering system (1) of a motor vehicle, which steer-by-wire steering system (1) is configured to carry out a method according to one of Claims 1 to 10.

## Revendications

1. Procédé de commande d'un système de direction à commande électrique pour véhicules automobiles, le système de direction à commande électrique (1) présentant
• un élément de réglage de direction (6) agissant sur les roues dirigées (7) et réglé électroniquement en fonction d'une demande de direction du conducteur,
• un actionneur de rétroaction (4) qui transmet des rétroactions de la route à un volant de direction (3),
et
• une unité de commande (5) comportant un logiciel (12) qui commande l'élément de réglage de direction (6) réglé électroniquement, **caractérisé en ce que** les étapes de procédé suivantes sont prévues :
- surveillance du fonctionnement du logiciel (12) dans un fonctionnement normal du système de direction à commande électrique (1) ;
- détection d'un fonctionnement défaillant du logiciel (12) et/ou d'un matériel de commande du système de direction à commande électrique et fonctionnement du système de direction à commande électrique (1) dans un fonctionnement de direction de secours, l'élément de réglage de direction (6) étant commandé de telle sorte que le couple de l'élément de réglage de direction (6) soit réduit dans le fonctionnement de direction de secours par rapport au fonctionnement normal.

2. Procédé selon la revendication 1, **caractérisé en ce que** l'élément de réglage de direction (6) est commandé dans le fonctionnement de direction de secours de telle sorte que le couple de l'élément de réglage de direction (6) dans le fonctionnement de direction de secours soit réduit d'un facteur par rapport au fonctionnement normal.

3. Procédé selon la revendication 1 ou 2, **caractérisé en ce que** l'élément de réglage de direction (6) est commandé dans le fonctionnement de direction de secours de telle sorte que le couple de l'élément de réglage de direction (6) dans le fonctionnement de direction de secours présente une valeur maximale qui est réduite par rapport à une valeur maximale du fonctionnement normal.

4. Procédé selon l'une des revendications précédentes, **caractérisé en ce que** l'élément de réglage de direction (6) présente dans le fonctionnement de secours de direction une vitesse de rotation réduite par rapport au fonctionnement normal.

5. Procédé selon la revendication 4, **caractérisé en ce que** l'élément de réglage de direction (6) est commandé dans le fonctionnement de secours de direction de telle sorte que la vitesse de rotation de l'élément de réglage de direction (6) dans le fonctionnement de secours de direction soit réduite d'un facteur par rapport au fonctionnement normal.

6. Procédé selon la revendication 4 ou 5, **caractérisé en ce que** l'élément de réglage de direction (6) est commandé dans le fonctionnement de secours de direction de telle sorte que la vitesse de rotation de l'élément de réglage de direction (6) dans le fonctionnement de secours de direction présente une valeur maximale qui est réduite par rapport à une valeur maximale du fonctionnement normal.

7. Procédé selon l'une des revendications précédentes, **caractérisé en ce que** le fonctionnement de secours de direction comporte une vitesse de véhicule maximale admissible.

8. Procédé selon la revendication 7, **caractérisé en ce que** la vitesse de véhicule maximale admissible est de 10 km/h.

9. Procédé selon l'une des revendications précédentes, **caractérisé en ce que** le fonctionnement de secours de direction est indiqué au conducteur par un signal généré de manière électrique ou électronique.

10. Procédé selon l'une des revendications précédentes, **caractérisé en ce que** le fonctionnement de secours de direction doit être confirmé par une entrée du conducteur.

11. Système de direction à commande électrique (1) d'un véhicule automobile, qui est réalisé pour mettre en œuvre un procédé selon l'une des revendications 1 à 10.
